# EUROPEAN PATENT APPLICATION

(11) **EP 4 794 284 A1**
(43) Date of publication of application: **19.08.2026**
(21) Application number: 24881011.1
(22) Date of filing: 27.05.2024
(51) Int. Cl.: H04L 41/0803, H04L 45/24, H04L 67/63, H04W 4/70, H04L 41/0894, H04L 67/12, H04L 69/14, H04L 67/141

(54) **MESSAGE TRANSMISSION CONFIGURATION METHOD BASED ON INTERNET OF THINGS TECHNOLOGY, APPARATUS, DEVICE, AND MEDIUM**

(30) Priority: 24.10.2023 CN 202311391295; 13.03.2024 CN 202410288628
(71) Applicant: Huawei Cloud Computing Technologies Co., Ltd., Gui'an New District, Guizhou 550025 (CN)
(72) Inventor: JIANG, Tianxiang, Guiyang, Guizhou 550025 (CN); JIAO, Bo, Guiyang, Guizhou 550025 (CN)
(74) Representative: Thun, Clemens
(86) International application number: PCT/CN2024/095516
(87) International publication number: WO 2025/086632

(57) **Abstract**

An embodiment of this application provides an internet of things technology-based message transmission configuration method applied to the field of internet of things technologies. The method is applied to an internet of things platform that is run on infrastructure. The internet of things platform obtains message transmission configuration information including a channel selection policy. The internet of things platform constructs a plurality of message transmission channels based on a channel identifier and a message transmission condition that are of each message transmission channel of the plurality of message transmission channels and that are included in the channel selection policy. The internet of things platform receives an obtained message sent by an internet of things device, determines a target message transmission channel with the message transmission condition that the message satisfies, and transmits the message to an internet of things application through the target message transmission channel. In this way, the message transmission channels can be constructed and the message can be transmitted based on a message transmission requirement of an internet of things service. The internet of things platform centrally manages message transmission, which can improve management efficiency and reduce message management costs on an application side. This application further provides a corresponding apparatus and a related device.

## Description

This application claims priorities to Chinese Patent Application No. 202311391295.5, filed with the China National Intellectual Property Administration on October 24, 2023 and entitled "METHOD, APPARATUS, AND RELATED DEVICE FOR DYNAMICALLY SELF-ADAPTING REAL-TIME PERFORMANCE OF DEVICE MESSAGE", and to Chinese Patent Application No. 202410288628.X, filed with the China National Intellectual Property Administration on March 13, 2024 and entitled "INTERNET OF THINGS TECHNOLOGY-BASED MESSAGE TRANSMISSION CONFIGURATION METHOD AND APPARATUS, DEVICE, AND MEDIUM", both of which are incorporated herein by reference in their entireties.

### TECHNICAL FIELD

This application relates to the field of internet of things technologies, and in particular, to an internet of things technology-based message transmission configuration method and apparatus, a device, and a medium.

### BACKGROUND

Internet of things (Internet of Things, IoT) is an information carrier of the Internet, a traditional telecommunications network, and the like, and enables all common objects with independent functions to interwork with each other. In a service scenario of the internet of things, an internet of things device needs to collect information, and send a message including the information to an application system of the internet of things. The application system implements service processing based on the obtained message. However, in a process in which the internet of things device transmits the message to the application system, a message transmission requirement is difficult to be met.

### SUMMARY

In view of this, this application provides an internet of things technology-based message transmission configuration method and apparatus, a device, and a medium, to control message transmission by an internet of things platform, and satisfy a message transmission requirement of an internet of things service.

According to a first aspect, this application provides an internet of things technology-based message transmission configuration method. The method is applied to an internet of things platform. The internet of things platform is run on infrastructure. The infrastructure is separately connected to an internet of things device and an application-side device. The internet of things device is configured to transmit a message to the internet of things platform. The application-side device runs an internet of things application. The internet of things platform obtains message transmission configuration information including a channel selection policy. The channel selection policy includes a channel identifier and a message transmission condition that are of each message transmission channel of a plurality of message transmission channels. Each message transmission channel is used for transmitting a message that satisfies the message transmission condition to the internet of things application. The internet of things platform constructs the plurality of message transmission channels between the internet of things platform and the application-side device according to the channel selection policy. In this way, a message transmission channel that satisfies a message transmission requirement of an internet of things service can be constructed between the internet of things platform and the application-side device, so that transmitting a message through the message transmission channel helps satisfy the message transmission requirement of the internet of things service. The internet of things platform constructs the message transmission channels, to centrally manage messages sent by the internet of things device and improve management efficiency. The internet of things platform receives the message sent by the internet of things device, determines, from the message transmission channels, a target message transmission channel with the message transmission condition that the message satisfies, and transmits the message to the internet of things application through the target message transmission channel. In this way, the message transmission channel that satisfies the message transmission condition can be selected for transmitting the message, to obtain a good message transmission effect.

In a possible implementation, the message includes a first timestamp at which the internet of things device generates the message. The internet of things platform obtains a second timestamp of the message. The second timestamp is time of receiving the message by the internet of things platform. A message transmission delay of the message can be determined by using the second timestamp and the first timestamp.

Further, the message transmission condition includes a target message transmission delay. In other words, the message transmission channels are divided based on the message transmission delay. The internet of things platform determines, based on the message sent by the internet of things device, the target message transmission channel with the target message transmission delay that the message transmission delay satisfies. In this way, the message transmission channel used for transmitting the message can be determined based on the message transmission delay of the message, so that messages with different real-time transmission requirements are transmitted, a requirement of the application-side device for processing a message with high real-time performance is met, and a service loss is reduced.

In a possible implementation, the message transmission condition includes a target message type. In other words, the message transmission channels are divided based on a message type. The internet of things platform determines a message type of the message based on the message sent by the internet of things device.

Further, the internet of things platform determines, based on the message type of the message, the target message transmission channel with the target message type that the message type satisfies. In this way, the message can be transmitted based on transmission requirements of messages of different message types.

In a possible implementation, the message transmission configuration information further includes a channel rate control policy, and the channel rate control policy indicates a traffic transmission rate of at least one message transmission channel. The internet of things platform configures the traffic transmission rate of the message transmission channel according to the channel rate control policy. The channel rate control policy is configured, to ensure that transmission rates of different message transmission channels are controlled, so as to avoid the application-side device from being affected and prevent the application-side device from being overwhelmed by backlogged messages. In addition, real-time transmission of a part of messages can be satisfied, to reduce a service loss.

In a possible implementation, the message transmission configuration information further includes a message backlog policy. The message backlog policy is used to configure a message backlog parameter of at least one message transmission channel. The message backlog parameter indicates a message backlog manner. The internet of things platform configures the message backlog parameter of the message transmission channel according to the message backlog policy. The message backlog policy is configured, so that when a message surge occurs, messages can be stored on the internet of things platform based on the message backlog manner indicated by the message backlog policy, to protect the application-side device from being attacked and prevent a message loss.

In a possible implementation, the message backlog parameter includes one or both of backlog time and a backlogged data volume. In this way, the backlog manner is configured based on different dimensions of the time and the data volume.

In a possible implementation, the internet of things platform discards the message if it is determined that the message does not satisfy the message transmission condition of each message transmission channel. In this way, receiving and processing performed by the application-side device on a useless message can be reduced, and a resource used by the application-side device to process messages can be saved.

According to a second aspect, this application provides an internet of things technology-based message transmission configuration apparatus. The apparatus is used on an internet of things platform, the internet of things platform is run on infrastructure, the infrastructure is separately connected to an internet of things device and an application-side device, the internet of things device is configured to transmit a message to the internet of things platform, the application-side device runs an internet of things application, and the apparatus includes:
an obtaining module, configured to obtain message transmission configuration information, where the message transmission configuration information includes a channel selection policy, the channel selection policy includes a channel identifier and a message transmission condition that are of each message transmission channel of a plurality of message transmission channels, and each message transmission channel is used for transmitting a message that satisfies the message transmission condition to the internet of things application;
a construction module, configured to construct the plurality of message transmission channels according to the channel selection policy;
a receiving module, configured to receive the message sent by the internet of things device;
a determining module, configured to determine a target message transmission channel for transmitting the message, where the message satisfies a message transmission condition of the target message transmission channel; and
a sending module, configured to transmit the message to the internet of things application through the target message transmission channel.

In a possible implementation, the message includes a first timestamp at which the internet of things device generates the message, and the determining module is further configured to:
obtain a second timestamp of the message, where the second timestamp is time of receiving the message sent by the internet of things device; and
determine a message transmission delay of the message based on the second timestamp and the first timestamp.

In a possible implementation, the message transmission condition includes a target message transmission delay, and the determining module is specifically configured to determine the target message transmission channel with the target message transmission delay that the message transmission delay satisfies.

In a possible implementation, the message transmission condition further includes a target message type, and the determining module is further configured to:
determine a message type of the message.

In a possible implementation, the determining module is specifically configured to determine, based on the message type of the message sent by the internet of things device, the target message transmission channel with the target message type that the message type satisfies.

In a possible implementation, the message transmission configuration information further includes a channel rate control policy, and the channel rate control policy indicates a traffic transmission rate of at least one message transmission channel.

The apparatus further includes:
a first configuration module, configured to configure the traffic transmission rate of the message transmission channel according to the channel rate control policy.

In a possible implementation, the message transmission configuration information further includes a message backlog policy, the message backlog policy is used to configure a message backlog parameter of at least one message transmission channel, and the message backlog parameter indicates a message backlog manner.

The apparatus further includes:
a second configuration module, configured to configure the message backlog parameter of the message transmission channel according to the message backlog policy.

In a possible implementation, the message backlog parameter includes one or both of backlog time and a backlogged data volume.

In a possible implementation, the apparatus further includes:
a discarding module, configured to discard the message if it is determined that the message does not satisfy the message transmission condition of each message transmission channel.

According to a third aspect, this application provides a compute device cluster, where the compute device cluster includes at least one compute device, and each compute device includes a processor and a memory. The memory is configured to store instructions. When the compute device cluster runs, the processor in each compute device executes the instructions stored in the memory, to enable the compute device cluster to perform the internet of things technology-based message transmission configuration method in the foregoing first aspect or any one of the possible implementations of the first aspect. It should be noted that the memory may be integrated into the processor, or may be independent of the processor. Each compute device may further include a bus. The processor is connected to the memory through the bus. The memory may include a readable memory and a random access memory.

According to a fourth aspect, this application provides a computer-readable storage medium, where the computer-readable storage medium stores instructions. When the instructions are run on a compute device cluster (the compute device cluster includes at least one compute device), the compute device cluster is enabled to perform the internet of things technology-based message transmission configuration method in the foregoing first aspect or any one of the possible implementations of the first aspect.

According to a fifth aspect, this application provides a computer program product including instructions. When the instructions are run on a compute device cluster (the compute device cluster includes at least one compute device), the compute device cluster is enabled to perform the internet of things technology-based message transmission configuration method in the foregoing first aspect or any one of the possible implementations of the first aspect.

In this application, based on the implementations provided in the foregoing aspects, the implementations may further be combined to provide more implementations.

### BRIEF DESCRIPTION OF DRAWINGS

FIG. 1 is a diagram of an internet of things platform architecture according to an embodiment of this application;
FIG. 2 is a diagram of an application scenario according to an embodiment of this application;
FIG. 3 is a schematic flowchart of an internet of things technology-based message transmission configuration method according to an embodiment of this application;
FIG. 4 is another schematic flowchart of an internet of things technology-based message transmission configuration method according to an embodiment of this application;
FIG. 5 is still another schematic flowchart of an internet of things technology-based message transmission configuration method according to an embodiment of this application;
FIG. 6 is a diagram of transmitting a message by an internet of things platform according to an embodiment of this application;
FIG. 7 is a diagram of a structure of an internet of things technology-based message transmission configuration apparatus according to an embodiment of this application;
FIG. 8 is a diagram of a structure of a compute device according to an embodiment of this application;
FIG. 9 is a diagram of a structure of a compute device cluster according to an embodiment of this application; and
FIG. 10 is a diagram of a structure of another compute device cluster according to an embodiment of this application.

### DESCRIPTION OF EMBODIMENTS

The following describes the solutions in embodiments provided in this application with reference to the accompanying drawings in this application.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application.

First, some technical terms in embodiments of this application are described.

Internet of things device: A terminal that accesses an internet of things platform according to an internet of things protocol for uplink and downlink communication is referred to as an internet of things device. For example, the internet of things device may be a service device directly connected to the internet of things platform, or may be a gateway that connects child devices to the internet of things platform, or may be a server that accesses the internet of things platform according to the internet of things protocol.

Device gateway: A device that manages child devices and connects child devices directly to an internet of things platform.

Edge: is an open platform that integrates network, computing, storage, and application core capabilities at an edge close to things or data sources; and provides computing and intelligent services nearby to satisfy basic requirements of an industry in terms of a real-time service, application intelligence, security, and privacy protection.

Internet of things (Internet of Things, IoT) platform: is configured to receive a message collected and reported by an internet of things device; and allows to be invoked by an internet of things application that is run on an application-side device.

Application-side device: In some scenarios, the application-side device is a device that runs a service system or an internet of things application that is constructed by a user based on services and that is connected to an internet of things platform. In some other scenarios, the application-side device is a device that is provided by a cloud platform and that is run on cloud infrastructure. The user can access the internet of things platform through the application-side device, to control an internet of things device, and obtain related information of the internet of things device. The application-side device runs the internet of things application.

Data forwarding: A data forwarding function is used as a channel between an IoT platform and an internet of things application to send device data to the internet of things application.

Message backlog: refers to that messages are stored on an IoT platform when the messages are not obtained by an application-side device.

Flow control: is configured to prevent network and application servers from being affected by a large amount of data during network interruption, to ensure efficient and stable running of a user network or service.

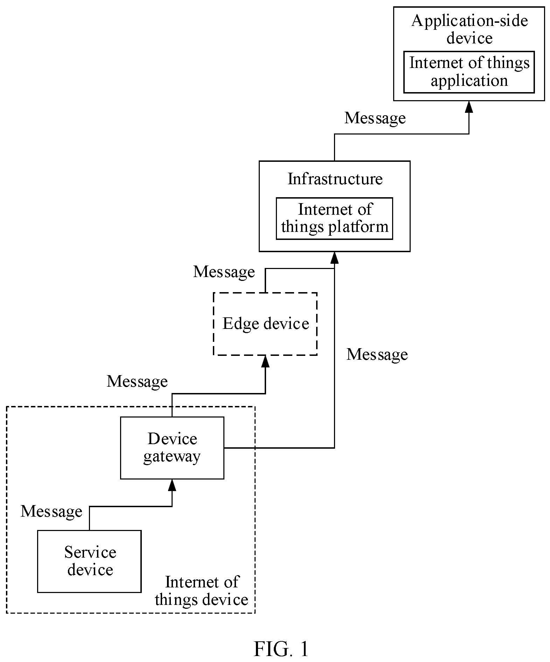

In an internet of things scenario, refer to FIG. 1. FIG. 1 is a diagram of an internet of things platform architecture according to an embodiment of this application. The internet of things platform architecture includes a service device, a device gateway, infrastructure, and an application-side device. The internet of things platform is constructed based on a basic device. The service device and the device gateway can be used as internet of things devices. The service device is used to collect internet of things data and process an internet of things service. The service device is, for example, a sensor. The application-side device can be a device that is created by a user or that is run on the infrastructure.

In a possible implementation, the basic device is an edge device. The service device is connected to the device gateway, and the device gateway is connected to the basic device, to implement message interaction between the internet of things device and the internet of things platform that is run on the basic device. In another possible implementation, the internet of things platform architecture further includes an edge device. The basic device is independent of the edge device. The device gateway is connected to the edge device, and the edge device is connected to the basic device, to implement message interaction between the internet of things device and the internet of things platform that is run on the basic device.

The infrastructure that runs the internet of things platform is also connected to the application-side device, to interact with the application-side device. The internet of things platform can send a message to an internet of things application that is run on the application-side device, so that the internet of things application processes the internet of things service. The user can also access the internet of things platform through the application-side device, to configure the internet of things platform.

The service device collects information about an ambient environment and generates device data. The service device sends, through a transmission link between the device gateway and the edge device, a message including the device data to the IoT platform that is run on the basic device. The basic device is connected to the application-side device. The IoT platform that is run on the basic device transmits the message to the internet of things application, so that the internet of things application processes the internet of things service based on the message.

The message is generally transmitted through the transmission link and on the internet of things platform according to a first-in, first-out policy, and finally reach the internet of things application that is run on the application-side device. The internet of things application processes the internet of things service based on the device data included in the obtained message. As messages that need to be transmitted increase, it is difficult to satisfy a message transmission requirement of the internet of things service in a case in which transmission resources are limited. For example, in a message transmission process, there may be the following scenarios: for example, a network delay changes greatly or a network is interrupted, or the internet of things device restarts due to a device fault. As a result, messages may be backlogged on an internet of things device side. After the network or the device fault is rectified, the internet of things application first receives the backlogged messages, and cannot quickly receive a real-time message. Consequently, processing of some internet of things services with a high requirement on real-time performance may be affected. The internet of things service with the high requirement on real-time performance is, for example, an internet of vehicles service, a traffic command service, an industrial tunnel service, or a medical service. For another example, in the message transmission process, a message surge may occur. As a result, the internet of things application is affected, and a problem like application device overload or a message loss occurs.

Currently, sufficient transmission resources are reserved between the infrastructure that runs the internet of things platform and the application-side device that runs the internet of things application, to alleviate the message surge caused by a message backlog. However, resource utilization is not high, and transmission costs are increased. The application-side device can perform simple flow control processing, but a processing resource of the application-side device needs to be consumed, and a processing effect is poor, which may cause longer time to obtain a valid message. In this case, it is difficult to satisfy the message transmission requirement of the internet of things service.

Based on this, an embodiment of this application provides an internet of things technology-based message transmission configuration method. The method is applied to an internet of things platform that is run on infrastructure. The infrastructure is separately connected to an internet of things device and an application-side device that runs an internet of things application. The internet of things platform is used to receive a message sent by the internet of things device and transmit the message to the application-side device. In the method, the internet of things platform obtains message transmission configuration information. The message transmission configuration information includes a channel selection policy. The channel selection policy includes a channel identifier and a message transmission condition that are of each message transmission channel of a plurality of message transmission channels. The internet of things platform constructs the plurality of message transmission channels according to the channel selection policy. The message transmission channel is a channel between the internet of things platform and internet of things application. The constructed message transmission channel is used for transmitting a message that satisfies the message transmission condition to the internet of things application. In this way, the message transmission channel between the internet of things platform and the internet of things application that is run on the application-side device can be configured based on a message transmission requirement of an internet of things service, so that a corresponding message transmission channel is selected based on the message transmission condition for transmitting the message, and the message transmission requirement of the internet of things service can be met. The internet of things platform receives the message sent by the internet of things device, determines a target message transmission channel for transmitting the message, and transmits the message to the internet of things application through the target message transmission channel. The message satisfies the message transmission condition of the target message transmission channel. The internet of things platform centrally manages message transmission, and selects, based on the message transmission condition, the message transmission channel for transmitting the message. This can satisfy the message transmission requirement and reduce costs required by the application-side device for controlling the message transmission.

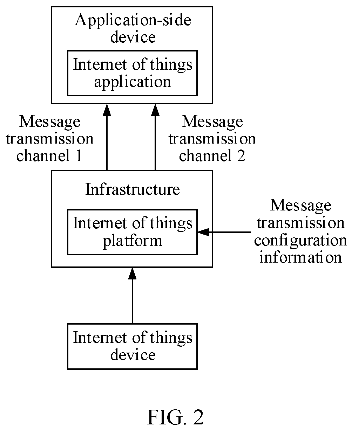

An application scenario of the internet of things technology-based message transmission configuration method is not limited in embodiments of this application. In some examples, FIG. 2 is a diagram of an application scenario according to an embodiment of this application.

Infrastructure that runs an internet of things platform is separately connected to an internet of things device and an application-side device. The internet of things device is a device that accesses the internet of things platform according to an internet of things protocol for uplink and downlink communication. The internet of things device is, for example, a sensor, a device gateway, or an edge device. The application-side device runs an internet of things application, for example, a service platform, an application system, or an application server.

The internet of things platform obtains message transmission configuration information. The message transmission configuration information is, for example, configured by a user through the application-side device. The message transmission configuration information includes a channel selection policy. The channel selection policy includes a channel identifier and a message transmission condition that are of each message transmission channel of a plurality of message transmission channels. In some possible implementations, the channel selection policy is determined by the user based on a message transmission requirement of an internet of things service. For example, the channel selection policy includes: transmitting a message through a message transmission channel 1 when a message transmission condition 1 is met, and transmitting a message through a message transmission channel 2 when a message transmission condition 2 is met. The internet of things platform constructs the message transmission channels according to the channel selection policy. For example, two message transmission channels are constructed according to the foregoing channel selection policy. Channel identifiers and message transmission conditions are configured for the two message transmission channels. For example, a channel identifier of the message transmission channel 1 and a message transmission condition of the message transmission condition 1 are configured for one message transmission channel of the two message transmission channels, and a channel identifier of a message transmission channel 2 and a message transmission condition of the message transmission condition 2 are configured for the other message transmission channel of the two message transmission channels. In this way, after obtaining the message, the internet of things platform determines a target message transmission channel for transmitting the message. The message is transmitted through the target message transmission channel.

It should be noted that the application scenario shown in FIG. 2 is merely an example. The internet of things technology-based message transmission configuration method provided in this application can be applied to another data forwarding scenario. An application scenario of the internet of things technology-based message transmission configuration method provided in embodiments of this application is not limited to the application scenario shown in FIG. 2.

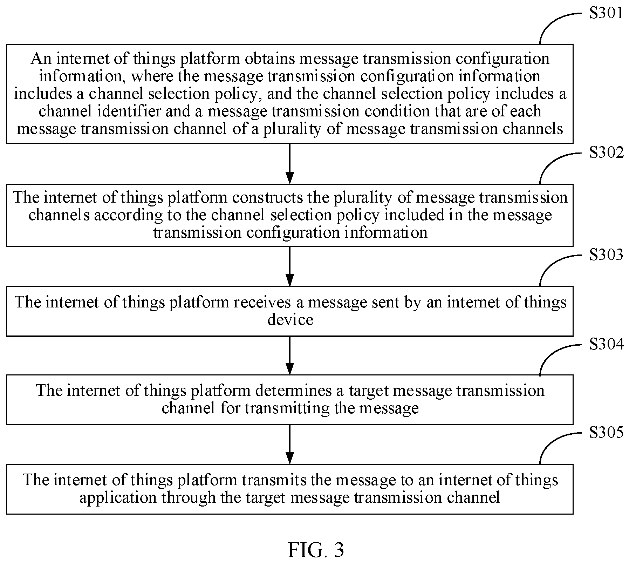

The following describes in detail various non-limiting specific implementations of the internet of things technology-based message transmission configuration method provided in this application. FIG. 3 is a schematic flowchart of an internet of things technology-based message transmission configuration method according to an embodiment of this application. The method can be applied to, for example, the internet of things platform in the scenario shown in FIG. 2. The method includes S301 to S305.

S301: An internet of things platform obtains message transmission configuration information, where the message transmission configuration information includes a channel selection policy, and the channel selection policy includes a channel identifier and a message transmission condition that are of each message transmission channel of a plurality of message transmission channels.

The message transmission configuration information is for constructing a message transmission channel between the internet of things platform and an internet of things application.

A manner in which the internet of things platform obtains the message transmission configuration information is not limited in this embodiment of this application. In an example, the application-side device provides a configuration interface and an application programming interface (Application Programming Interface, API) of the internet of things platform for a user. The user triggers, through the configuration interface and the API that are provided by the application-side device, generation of the message transmission configuration information, to configure the internet of things platform. In another example, the internet of things platform is connected to a management device. The user configures the message transmission configuration information through the management device. The management device sends the message transmission configuration information to the internet of things platform.

The message transmission configuration information includes the channel selection policy. The channel selection policy is used to determine a message transmission channel used for transmitting a message. In some possible implementations, the channel selection policy is determined based on a message transmission requirement of an internet of things service. In a process of processing the internet of things service, for different messages, message transmission requirements are different. The channel selection policy is determined based on different message transmission requirements. The channel selection policy may be generated by using a user configuration, or may be generated by using a policy generation algorithm.

Content of the message transmission condition in the channel selection policy is not limited in this embodiment of this application.

In a possible implementation, the internet of things service has a requirement on real-time message transmission. The requirement on real-time message transmission is a requirement on real-time performance of message transmission. The real-time performance of the message transmission can be measured by a message transmission delay. In an example, the message transmission condition includes a target message transmission delay.

In another possible implementation, in the internet of things service, messages of different message types have different transmission requirements. For example, a transmission priority of a service message is higher than a transmission priority of an operations and maintenance message. The message transmission condition includes a target message type. The channel selection policy includes the channel identifier and the message transmission condition of each message transmission channel of the plurality of message transmission channels. The channel identifier of the message transmission channel is used to distinguish different message transmission channels. In an example, the channel identifier of the message transmission channel is a name of the message transmission channel, or a sequence number of the message transmission channel. The message transmission condition is a condition that needs to be satisfied by a message transmitted through the message transmission channel.

In an example, the following describes a case of the requirement on real-time message transmission.

The channel selection policy can be represented by, for example, function (device_timestamp, platform_timestamp). device_timestamp is a first timestamp at which an internet of things device generates the message. platform_timestamp is a second timestamp at which the internet of things platform obtains the message sent by the internet of things device. The message transmission delay is determined based on platform_timestamp and device_timestamp. Specifically, in an example, a difference between platform_timestamp and device_timestamp is calculated to obtain the message transmission delay. In another example, platform_timestamp and device_timestamp are input into a message transmission delay determining model that is trained in advance, to obtain the message transmission delay output by the message transmission delay determining model.

For example, a channel selection policy determined based on the requirement on real-time message transmission is that a message whose message transmission delay is less than or equal to a first delay threshold and greater than a second delay threshold is transmitted through a cold data channel, a message whose message transmission delay is less than or equal to the second delay threshold and greater than a third delay threshold is transmitted through a hot data channel, and a message whose message transmission delay is less than or equal to the third delay threshold is transmitted through a real-time data channel. The channel selection policy involves three message transmission channels. Channel identifiers of the three message transmission channels are channel names, which are respectively the cold data channel, the hot data channel, and the real-time data channel. Message transmission conditions are respectively that the message transmission delay of the message is less than or equal to the first delay threshold and greater than the second delay threshold, the message transmission delay of the message is less than or equal to the second delay threshold and greater than the third delay threshold, and the message transmission delay of the message is less than or equal to the third delay threshold.

It should be noted that a specific value of a delay threshold is not limited in this embodiment of this application, and the delay threshold can be configured based on a division requirement of the message transmission channels. For example, the first delay threshold is 10 seconds, the second delay threshold is 1 second, and the third delay threshold is 50 milliseconds.

In this way, after the internet of things device recovers from a fault, recovers from a restart, and recovers from a network interruption, surge messages pushed by the internet of things device can be transmitted through different message transmission channels based on different message transmission delays, to reduce impact of the fault on message transmission with high real-time performance, and ensure processing continuity of the internet of things service.

The foregoing channel selection policy is only an example. In this embodiment of this application, a specific quantity of the plurality of message transmission channels included in the channel selection policy determined based on the requirement on real-time message transmission, and a message transmission condition of each message transmission channel, are not limited. In some other examples, the channel selection policy determined based on the requirement on real-time message transmission includes two message transmission channels. For example, the channel selection policy is that a message whose message transmission delay is greater than a fourth delay threshold is transmitted through a first channel, and a message whose message transmission delay is less than or equal to the fourth delay threshold is transmitted through a second channel. Channel identifiers of the first channel and the second channel are channel names. For example, channel names of the first channel and the second channel are respectively, for example, a cold data channel and a hot data channel. The fourth delay threshold is, for example, 2 seconds. For another example, channel names of the first channel and the second channel are respectively, for example, a hot data channel and a real-time data channel. The fourth delay threshold is, for example, 50 milliseconds. For still another example, channel names of the first channel and the second channel are respectively, for example, a cold data channel and a real-time data channel. The fourth delay threshold is, for example, 1 seconds.

In another example, the following describes a case of transmission requirements of different message types.

For example, a channel selection policy determined based on a transmission requirement of a message type is that a service message is transmitted through a service message transmission channel, and an operations and maintenance message is transmitted through an operations and maintenance message transmission channel. The channel selection policy includes two message transmission channels. Channel identifiers of the two message transmission channels are channel names, which are respectively the service message transmission channel and the operations and maintenance message transmission channel. Message transmission conditions are respectively that a message type is the service message, and a message type is the operations and maintenance message.

The channel selection policy indicates a quantity of message transmission channels, a channel identifier, and a message transmission condition. According to the channel selection policy included in the message transmission configuration information, a message transmission channel between the internet of things platform and the application-side device can be constructed.

In addition, the message transmission configuration information may further include one or both of a channel rate control policy and a message backlog policy. The channel rate control policy is used to configure a rate at which messages are transmitted through the message transmission channel. The message backlog policy is used to configure a message backlog manner of the message transmission channel. For details about the channel rate control policy, the message backlog policy, and a specific process of configuring the message transmission channel, refer to the following descriptions.

S302: The internet of things platform constructs the plurality of message transmission channels according to the channel selection policy included in the message transmission configuration information.

The internet of things platform constructs the plurality of message transmission channels according to the obtained channel selection policy.

A quantity of the constructed message transmission channels is related to a quantity of message transmission channels to be configured according to the channel selection policy. The quantity of the message transmission channels can be greater than or equal to the quantity of message transmission channels related to the channel selection policy.

It should be noted that a possible implementation in which the internet of things platform constructs the message transmission channel is not limited in this embodiment of this application. In a possible implementation, the internet of things platform constructs a new message transmission channel based on a message transmission resource. In another possible implementation, the internet of things platform constructs the message transmission channel through a constructed and available transmission channel. In an example, the internet of things platform uses the constructed and available transmission channel as the message transmission channel.

The internet of things platform constructs the channel identifier of each message transmission channel based on the channel identifier of each message transmission channel included in the channel selection policy, and constructs, based on the message transmission condition of each message transmission channel included in the channel selection policy, a condition that needs to be satisfied by a message that can be transmitted through each message transmission channel.

Using the foregoing channel selection policy as an example, the channel selection policy is that a message whose message transmission delay is less than or equal to a first delay threshold and greater than a second delay threshold is transmitted through a cold data channel, a message whose message transmission delay is less than or equal to the second delay threshold and greater than a third delay threshold is transmitted through a hot data channel, and a message whose message transmission delay is less than or equal to the third delay threshold is transmitted through a real-time data channel. The internet of things platform constructs three message transmission channels between the internet of things platform and the internet of things application according to the obtained channel selection policy. In addition, channel identifiers and message transmission conditions of the three message transmission channels are separately configured. A channel identifier of the "cold data channel" is configured for one message transmission channel, and a message transmission condition is configured to be that a message transmission delay of a message is less than or equal to the first delay threshold and greater than the second delay threshold. A channel identifier of the "hot data channel" is configured for another message transmission channel, and a message transmission condition is configured to be that a message transmission delay of a message is less than or equal to the first delay threshold and greater than the second delay threshold. A channel identifier of the "real-time data channel" is configured for still another message transmission channel, and a message transmission condition is configured to be that a message transmission delay of a message is less than or equal to the third delay threshold.

S303: The internet of things platform receives a message sent by the internet of things device.

The message sent by the internet of things device includes data that is related to the internet of things service and that needs to be transmitted to the application-side device.

S304: The internet of things platform determines a target message transmission channel for transmitting the message.

The internet of things platform determines a message transmission condition that the message satisfies, and determines the target message transmission channel with the message transmission condition that the message satisfies.

For example, the foregoing message transmission condition includes a target message transmission delay. Whether the message satisfies the message transmission condition of a message transmission channel is determined based on a message transmission delay of the message.

For example, the message includes a first timestamp at which the internet of things device generates the message. The internet of things platform obtains a second timestamp of the message, that is, a timestamp indicating time of receiving the message by the internet of things platform. The internet of things platform obtains the message transmission delay of the message based on a time difference between the second timestamp and the first timestamp. The internet of things platform determines the message transmission condition that the message transmission delay of the message satisfies, and then determines the target message transmission channel for transmitting the message, that is, a message transmission channel with the message transmission condition that the message transmission delay of the message satisfies.

For example, the foregoing message transmission condition includes a target message type. Whether the message satisfies the message transmission condition of a message transmission channel is determined based on a message type of the message.

For example, the internet of things platform determines the message type of the message based on the message sent by the internet of things device. The internet of things platform determines a message transmission condition that the message type of the message satisfies, to determine the target message transmission channel with the message type that the target message type satisfies.

S305: The internet of things platform transmits the message to the internet of things application through the target message transmission channel.

If the message satisfies the message transmission condition of the target message transmission channel, the message is transmitted, through the target message transmission channel, to the internet of things application that is run on the application-side device. The target message transmission channel is one of the plurality of message transmission channels between the internet of things platform and the application-side device.

It should be noted that when a traffic transmission rate is configured for the target message transmission channel according to the channel rate control policy, the message is transmitted at the configured traffic transmission rate. When a message backlog parameter is configured for the target message transmission channel according to the message backlog policy, if the message fails to be sent, the message is stored in a message backlog manner indicated by the message backlog parameter. For details about a method for configuring the traffic transmission rate and the message backlog parameter, refer to the following sections.

A processing manner of a case in which the message does not satisfy the message transmission condition of each message transmission channel is not limited in this embodiment of this application. In a possible implementation, if it is determined that the message does not satisfy the message transmission condition of each message transmission channel, it indicates that the message is invalid for processing of the internet of things service, and the message is discarded. In this way, receiving and processing performed by the application-side device on a useless message can be reduced, and a resource used by the application-side device to process messages can be saved. In another possible implementation, if it is determined that the message does not satisfy the message transmission condition of each message transmission channel, the message is backlogged, and when the message transmission channel is in an idle state, the message is transmitted to the application-side device through the message transmission channel in the idle state.

A configured message transmission channel is used for transmitting the message that satisfies the message transmission condition. In this way, the message transmission channel between the internet of things platform and the application-side device can be constructed based on the message transmission requirement of the internet of things service, to help transmission of the message through the message transmission channel, to satisfy the message transmission requirement of the internet of things service. Compared with a case that the internet of things device controls message transmission, the internet of things platform performs centralized transmission management on messages that need to be sent to the application-side device, to improve management efficiency and obtain a good message transmission effect. In addition, as the internet of things platform performs the transmission management on the messages, costs of managing the message transmission by the application-side device can be reduced.

In some possible implementations, a message transmission rate of the message transmission channel can be further configured.

The message transmission configuration information further includes the channel rate control policy. The channel rate control policy is used to configure a rate at which messages are transmitted through the message transmission channel. In an example, the channel rate control policy is used to configure a traffic transmission rate of at least one message transmission channel. The traffic transmission rate can be measured by using queries per second (Queries per second, QPS).

A quantity of message transmission channels for which the channel rate control policy is applied is less than or equal to a quantity of message transmission channels related to the channel selection policy. The specific quantity of message transmission channels for which the channel rate control policy is applied is not limited in this embodiment of this application. The channel rate control policy can be configured based only on one of the plurality of message transmission channels related to the channel selection policy, or can be configured based on a part of the plurality of message transmission channels related to the channel selection policy, or can be configured based on all of the plurality of message transmission channels related to the channel selection policy.

Specific content included in the channel rate control policy is not limited in this embodiment of this application. In an example, the channel rate control policy may include a traffic transmission rate corresponding to a channel identifier of a message transmission channels. The channel identifier of the message transmission channel indicates a message transmission channel for which the traffic transmission rate needs to be configured. The traffic transmission rate corresponding to the channel identifier can be set based on a message transmission requirement and a transmission resource that is of the internet of things platform and the application-side device.

Using the cold data channel, the hot data channel, and the real-time data channel that are constructed above as an example, a requirement on real-time message transmission of the cold data channel is lower than a requirement on real-time message transmission of the hot data channel, and the requirement on the real-time message transmission of the hot data channel is lower than a requirement on real-time message transmission of the real-time data channel. The channel rate control policy includes that QPS corresponding to the cold data channel is 20 pieces/second, QPS corresponding to the hot data channel is 100 pieces/second, and QPS corresponding to the real-time data channel is 200 pieces/second.

Using the service message transmission channel and the operations and maintenance message transmission channel that are constructed above as an example, the channel rate control policy includes that QPS corresponding to the operations and maintenance message transmission channel is 20 pieces/second, and QPS corresponding to the service message transmission channel is 200 pieces/second.

For a message transmission channel for which a traffic transmission rate is not configured, a default traffic transmission rate can be used for transmitting the message.

In addition, the channel rate control policy further includes a rate adjustment condition corresponding to the traffic transmission rate and the channel identifier that is of the message transmission channel. The rate adjustment condition is a condition that needs to be satisfied for the use of the traffic transmission rate. In this way, traffic transmission rates of message transmission channels are configured for message transmission requirements of the internet of things service in different message transmission scenarios, to adaptively adjust the traffic transmission rates of the message transmission channels for different message transmission scenarios.

In an example, the channel rate control policy can be represented by, for example, function_flow_policy (qps, channel, rule). qps indicates the traffic transmission rate. channel indicates the channel identifier of the message transmission channel. rule is the rate adjustment condition.

The channel rate control policy includes that when a message surge is detected, QPS corresponding to the cold data channel is 20 pieces/second; when the message surge is detected, QPS corresponding to the hot data channel is 100 pieces/second; and when the message surge is detected, QPS corresponding to the real-time data channel is 200 pieces/second.

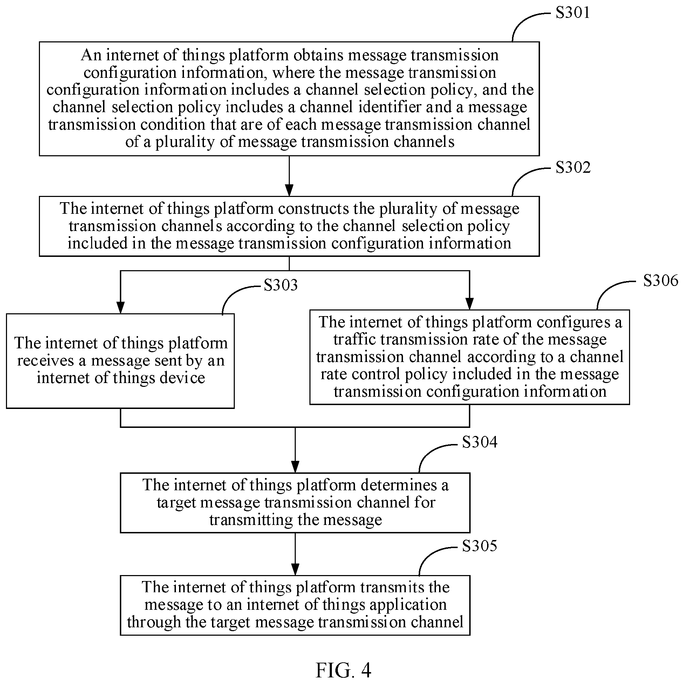

In addition to the foregoing S301 to S305, refer to FIG. 4. The message transmission method provided in this embodiment of this application further includes the following step.

S306: The internet of things platform configures the traffic transmission rate of the message transmission channel according to the channel rate control policy included in the message transmission configuration information.

The internet of things platform configures the traffic transmission rate for the message transmission channel for which the channel rate control policy is applied.

For example, the foregoing channel rate control policy includes the traffic transmission rate corresponding to the channel identifier of the message transmission channel. The internet of things platform determines, based on the channel identifier included in the channel rate control policy, the message transmission channel that needs to be configured; and configures, based on the traffic transmission rate corresponding to the channel identifier included in the channel rate control policy, the message transmission channel identified by the channel identifier.

For example, the channel rate control policy further includes the rate adjustment condition. The internet of things platform determines, based on the channel identifier included in the channel rate control policy, the message transmission channel that needs to be configured; and configures, based on the traffic transmission rate corresponding to the channel identifier included in the channel rate control policy and the rate adjustment condition corresponding to the traffic transmission rate, the message transmission channel identified by the channel identifier.

An execution order of S306 is not limited in this embodiment of this application. In a possible implementation, after S302 is performed to construct the message transmission channels, S306 is performed.

The channel rate control policy is configured, to ensure that transmission rates of different message transmission channels are controlled, so as to avoid the application-side device from being affected and prevent the application-side device from being overwhelmed by backlogged messages. In addition, real-time transmission of a part of messages can be satisfied, to reduce a service loss.

In some other possible implementations, a message backlog manner of the message transmission channels can be further configured.

The message transmission configuration information further includes the message backlog policy. The message backlog policy is used to configure a message backlog parameter of at least one message transmission channel. The message backlog parameter indicates a message backlog manner.

A parameter type of the message backlog parameter is not limited in this embodiment of this application. In an example, the message backlog parameter is backlog time. The backlog time is maximum message backlog time. In another example, the message backlog parameter is a backlogged data volume. The backlogged data volume is a maximum data volume of backlogged messages. In still another example, the message backlog parameter includes the backlog time and the backlogged data volume.

A quantity of message transmission channels for which the message backlog policy is applied is less than or equal to a quantity of message transmission channels related to the channel selection policy. The specific quantity of message transmission channels for which the message backlog policy is applied is not limited in this embodiment of this application. The message backlog policy can be configured based only on one of the plurality of message transmission channels related to the channel selection policy, or can be configured based on a part of the plurality of message transmission channels related to the channel selection policy, or can be configured based on all of the plurality of message transmission channels related to the channel selection policy.

Specific content included in the message backlog policy is not limited in this embodiment of this application. In an example, the message backlog policy may include a message backlog parameter corresponding to a channel identifier of a message transmission channel. The channel identifier of the message transmission channel indicates a message transmission channel for which the message backlog parameter needs to be configured. The message backlog parameter corresponding to the channel identifier can be set based on a message transmission requirement and a storage resource that is of the internet of things platform.

In an example, the message backlog policy can be represented by, for example, function_backlog _policy (backlog_size, backlog_time, channel). backlog_size indicates the backlogged data volume. backlog_time indicates the backlog time. channel indicates the channel identifier of the message transmission channel.

The cold data channel, the hot data channel, and the real-time data channel that are constructed above are used as an example. The message backlog policy includes that backlog time corresponding to the cold data channel is 24 hours, backlog time corresponding to the hot data channel is 6 hours, and backlog time corresponding to the real-time data channel is 1 hour.

For a message transmission channel for which the message backlog parameter is not configured, a default message backlog parameter can be used or the message backlog manner is not used for message processing.

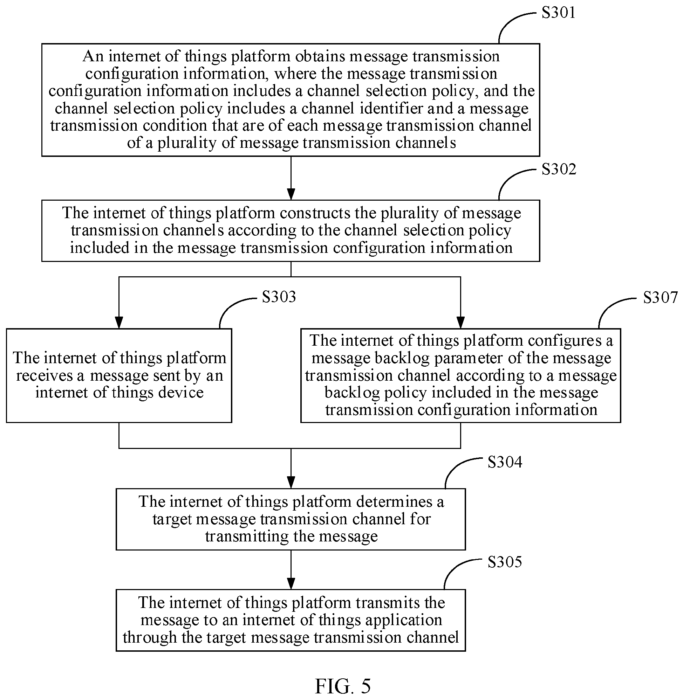

In addition to the foregoing S301 to S305, refer to FIG. 5. The message transmission method provided in this embodiment of this application further includes the following step.

S307: The internet of things platform configures the message backlog parameter of the message transmission channel according to the message backlog policy included in the message transmission configuration information.

The internet of things platform configures the message backlog parameter for the message transmission channel for which the message backlog policy is applied.

For example, the foregoing message backlog policy includes a message backlog parameter corresponding to the channel identifier of the message transmission channel. The internet of things platform determines, based on the channel identifier included in the message backlog policy, the message transmission channel that needs to be configured; and configures, based on the message backlog parameter corresponding to the channel identifier included in the message backlog policy, the message transmission channel identified by the channel identifier.

An execution order of S307 is not limited in this embodiment of this application. In a possible implementation, after S307 is performed to construct the message transmission channels, S307 is performed.

The message backlog policy is configured, so that when a message surge occurs, messages can be stored on the internet of things platform based on the message backlog manner indicated by the message backlog policy, to protect the application-side device from being attacked and prevent a message loss.

In addition, the channel rate control policy and the message backlog policy can be independently configured or jointly configured. This is not limited in this embodiment of this application. When the message transmission configuration information further includes the channel rate control policy and the message backlog policy, an order in which the internet of things platform configures the traffic transmission rate of the message transmission channel according to the channel rate control policy included in the message transmission configuration information and configures the message backlog parameter of the message transmission channel according to the message backlog policy included in the message transmission configuration information is not limited in this embodiment of this application. The internet of things platform can first configure the traffic transmission rate of the message transmission channel according to the channel rate control policy, and then configure the message backlog parameter of the message transmission channel according to the message backlog policy. Alternatively, the internet of things platform can first configure the message backlog parameter of the message transmission channel according to the message backlog policy, and then configure the traffic transmission rate of the message transmission channel according to the channel rate control policy. Alternatively, the internet of things platform simultaneously configures the traffic transmission rate of the message transmission channel according to the channel rate control policy and configures the message backlog parameter of the message transmission channel according to the message backlog policy.

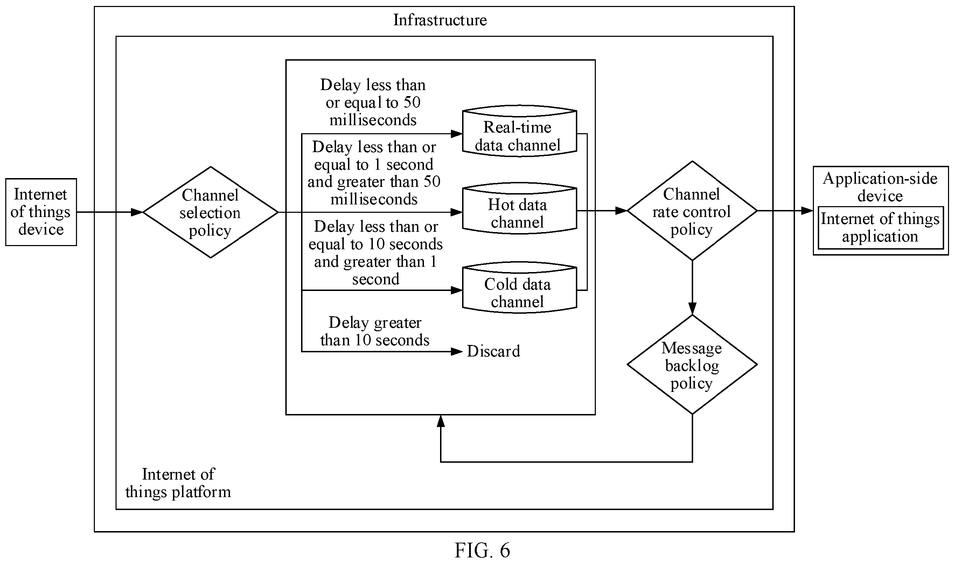

In an example, refer to FIG. 6. FIG. 6 is a diagram of transmitting a message by an internet of things platform according to an embodiment of this application.

The internet of things platform obtains message transmission configuration information. The message transmission configuration information includes a channel selection policy, a channel rate control policy, and a message backlog policy.

The channel selection policy is that a message whose message transmission delay is less than or equal to 10 seconds and greater than 1 second is transmitted through a cold data channel, a message whose message transmission delay is less than or equal to 1 second and greater than 50 milliseconds is transmitted through a hot data channel, and a message whose message transmission delay is less than or equal to 50 milliseconds is transmitted through a real-time data channel.

The channel rate control policy includes that QPS corresponding to the cold data channel is 20 pieces/second, QPS corresponding to the hot data channel is 100 pieces/second, and QPS corresponding to the real-time data channel is 200 pieces/second.

The message backlog policy includes that backlog time corresponding to the cold data channel is 24 hours, backlog time corresponding to the hot data channel is 6 hours, and backlog time corresponding to the real-time data channel is 1 hour.

The internet of things platform constructs and configures message transmission channels based on the message transmission configuration information.

A message transmission condition of the cold data channel is that a message transmission delay of a message is less than or equal to 10 seconds and greater than 1 second. A message is transmitted through the cold data channel at a QPS transmission rate of 20 pieces/second. If the message cannot be transmitted, the message is stored. Maximum storage time of the message is the backlog time, that is, 24 hours.

A message transmission condition of the hot data channel is that a message transmission delay of a message is less than or equal to 1 second and greater than 50 milliseconds. A message is transmitted through the hot data channel at a QPS transmission rate of 100 pieces/second. If the message cannot be transmitted, the message is stored. Maximum storage time of the message is the backlog time, that is, 6 hours.

A message transmission condition of the real-time data channel is that if a message transmission delay of a message is less than or equal to 50 milliseconds, a target message transmission channel is the real-time data channel. A message is transmitted through the real-time data channel at a QPS transmission rate of 200 pieces/second. If the message cannot be transmitted, the message is stored. Maximum storage time of the message is the backlog time, that is, 1 hour.

If a message transmission delay of a message is greater than 10 seconds, that is, the message transmission conditions of the three message transmission channels are not met, the message is discarded.

For example, the internet of things platform obtains a message 1. A first timestamp of the message 1 is 1658976485003, and a second timestamp of the message 1 is 1658976487015. Both the first timestamp and the second timestamp are timestamps in milliseconds. A difference between the second timestamp and the first timestamp is calculated, to obtain a message transmission delay of the message 1 being 2 seconds and 12 milliseconds. Based on the message transmission conditions of the foregoing three data transmission channels, it is determined that the message transmission delay of the message 1 satisfies the message transmission condition of the cold data channel. The message 1 is transmitted through the cold data channel at the QPS transmission rate of 20 pieces/second. If the message 1 cannot be transmitted in real time, the message 1 is first stored, and the message 1 is transmitted through the cold data channel at a moment available for transmission. Maximum storage time of the message 1 is 24 hours. For another example, the internet of things platform obtains a message 2. A first timestamp of the message 2 is 1658976485003, and a second timestamp of the message 2 is 1658976485035. A difference between the second timestamp and the first timestamp is calculated, to obtain a message transmission delay of the message 2 being 32 milliseconds. Based on the message transmission conditions of the foregoing three data transmission channels, it is determined that the message transmission delay of the message 2 satisfies the message transmission condition of the real-time data channel. The message 2 is transmitted through the real-time data channel at the QPS transmission rate of 200 pieces/second. If the message 2 cannot be transmitted in real time, the message 2 is first stored, and the message 2 is transmitted through the real-time data channel at a moment available for transmission. Maximum storage time of the message 2 is 1 hour.

For still another example, the internet of things platform obtains a message 3. A first timestamp of the message 3 is 1658976485003, and a second timestamp of the message 3 is 1658976485055. A difference between the second timestamp and the first timestamp is calculated, to obtain a message transmission delay of the message 3 being 52 milliseconds. Based on the message transmission conditions of the foregoing three data transmission channels, it is determined that the message transmission delay of the message 3 satisfies the message transmission condition of the hot data channel. The message 3 is transmitted through the hot data channel at the QPS transmission rate of 100 pieces/second. If the message 3 cannot be transmitted in real time, the message 3 is first stored, and the message 3 is transmitted through the hot data channel at a moment available for transmission. Maximum storage time of the message 3 is 6 hours.

For yet another example, the internet of things platform obtains a message 4. A first timestamp of the message 4 is 1658976485003, and a second timestamp of the message 4 is 1658976500158. A difference between the second timestamp and the first timestamp is calculated, to obtain a message transmission delay of the message 4 being 15 seconds and 155 milliseconds. Based on the message transmission conditions of the foregoing three data transmission channels, it is determined that the message transmission delay of the message 4 does not satisfy the message transmission conditions of the three data transmission channels, and the message 4 is discarded.

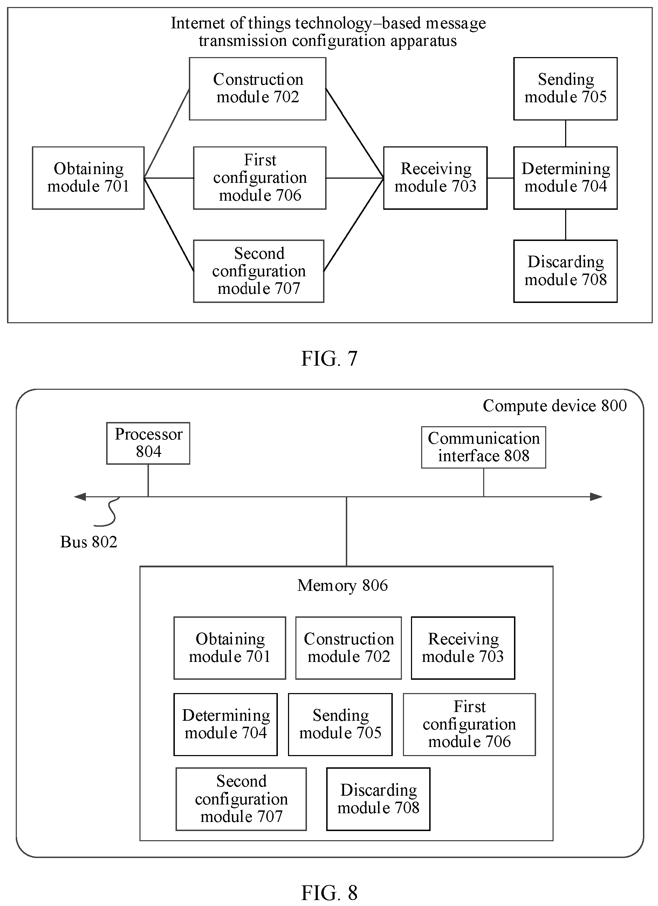

This application further provides an internet of things technology-based message transmission configuration apparatus. The internet of things technology-based message transmission configuration apparatus is used on an internet of things platform that is run on infrastructure. The infrastructure is separately connected to an internet of things device and an application-side device. The internet of things platform is used to receive a message sent by the internet of things device and transmit the message to an internet of things application that is run on the application-side device. As shown in FIG. 7, the apparatus includes:
an obtaining module 701, configured to obtain message transmission configuration information, where the message transmission configuration information includes a channel selection policy, the channel selection policy includes a channel identifier and a message transmission condition that are of each message transmission channel of a plurality of message transmission channels, and each message transmission channel is used for transmitting a message that satisfies the message transmission condition to the internet of things application;
a construction module 702, configured to construct the plurality of message transmission channels according to the channel selection policy;
a receiving module 703, configured to receive the message sent by the internet of things device;
a determining module 704, configured to determine a target message transmission channel for transmitting the message, where the message satisfies a message transmission condition of the target message transmission channel; and
a sending module 705, configured to transmit the message to the internet of things application through the target message transmission channel.

In a possible implementation, the message includes a first timestamp at which the internet of things device generates the message, and the determining module 704 is further configured to:
obtain a second timestamp of the message, where the second timestamp is time of receiving the message sent by the internet of things device; and
determine a message transmission delay of the message based on the second timestamp and the first timestamp.

In a possible implementation, the message transmission condition includes a target message transmission delay, and the determining module 704 is specifically configured to determine the target message transmission channel with the target message transmission delay that the message transmission delay satisfies.

In a possible implementation, the message transmission condition further includes a target message type, and the determining module 704 is further configured to:
determine a message type of the message.

In a possible implementation, the determining module 704 is specifically configured to determine, based on the message type of the message sent by the internet of things device, the target message transmission channel with the target message type that the message type satisfies.

In a possible implementation, the message transmission configuration information further includes a channel rate control policy, and the channel rate control policy indicates a traffic transmission rate of at least one message transmission channel.

The apparatus further includes:
a first configuration module 706, configured to configure the traffic transmission rate of the message transmission channel according to the channel rate control policy.

In a possible implementation, the message transmission configuration information further includes a message backlog policy, the message backlog policy is used to configure a message backlog parameter of at least one message transmission channel, and the message backlog parameter indicates a message backlog manner.

The apparatus further includes:
a second configuration module 707, configured to configure the message backlog parameter of the message transmission channel according to the message backlog policy.

In a possible implementation, the message backlog parameter includes one or both of backlog time and a backlogged data volume.

In a possible implementation, the apparatus further includes:
a discarding module 708, configured to discard the message if it is determined that the message does not satisfy the message transmission condition of each message transmission channel.

The obtaining module 701, the construction module 702, the receiving module 703, the determining module 704, the sending module 705, the first configuration module 706, the second configuration module 707, and the discarding module 708 may all be implemented by using software or hardware. For example, the following uses the obtaining module 701 as an example to describe an implementation of the obtaining module 701. Similarly, for implementations of the construction module 702, the receiving module 703, the determining module 704, the sending module 705, the first configuration module 706, the second configuration module 707, and the discarding module 708, reference may be made to the implementation of the obtaining module 701.

A module is used as an example of a software functional unit, and the obtaining module 701 may include code that is run on a compute instance. The compute instance may include at least one of a physical host (compute device), a virtual machine, and a container. Further, a quantity of the foregoing compute instances may be one or more. For example, the obtaining module 701 may include code that is run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers used to run the code may be distributed on a same virtual private cloud (virtual private cloud, VPC), or may be distributed on a plurality of VPCs. Usually, one VPC is set in one region. A communication gateway needs to be set in each VPC for communication between two VPCs in a same region or between VPCs in different regions. Interconnection between the VPCs is implemented through the communication gateway.

A module is used as an example of a hardware functional unit, and the obtaining module 701 may include at least one compute device, for example, a server. Alternatively, the obtaining module 701 may also be a device or the like that is implemented by using an application-specific integrated circuit (application-specific integrated circuit, ASIC) or a programmable logic device (programmable logic device, PLD). The foregoing PLD may be implemented by a complex programmable logic device (complex programmable logic device, CPLD), a field-programmable gate array (field-programmable gate array, FPGA), generic array logic (generic array logic, GAL), or any combination thereof.

A plurality of compute devices included in the obtaining module 701 may be distributed in a same region, or may be distributed in different regions. The plurality of compute devices included in the obtaining module 701 may be distributed in a same AZ, or may be distributed in different AZs. Similarly, the plurality of compute devices included in the obtaining module 701 may be distributed in a same VPC, or may be distributed in a plurality of VPCs. The plurality of compute devices may be any combination of compute devices such as a server, an ASIC, a PLD, a CPLD, an FPGA, and GAL.

It should be noted that, in another embodiment, the obtaining module 701 may be configured to perform any step in the internet of things technology-based message transmission configuration method, the construction module 702 may be configured to perform any step in the internet of things technology-based message transmission configuration method, the receiving module 703 may be configured to perform any step in the internet of things technology-based message transmission configuration method, and the determining module 704 may be configured to perform any step in the internet of things technology-based message transmission configuration method, the sending module 705 may be configured to perform any step in the internet of things technology-based message transmission configuration method, the first configuration module 706 may be configured to perform any step in the internet of things technology-based message transmission configuration method, the second configuration module 707 may be configured to perform any step in the internet of things technology-based message transmission configuration method, and the discarding module 708 may be configured to perform any step in the internet of things technology-based message transmission configuration method. Steps implemented by the obtaining module 701, the construction module 702, the receiving module 703, the determining module 704, the sending module 705, the first configuration module 706, the second configuration module 707, and the discarding module 708 may be specified as required. Through the obtaining module 701, the construction module 702, the receiving module 703, the determining module 704, the sending module 705, the first configuration module 706, the second configuration module 707, and the discarding module 708, different steps in the internet of things technology-based message transmission configuration method are separately implemented, so that all functions of the internet of things technology-based message transmission configuration apparatus are implemented.

This application further provides a compute device 800. As shown in FIG. 8, the compute device 800 includes: a bus 802, a processor 804, a memory 806, and a communication interface 808. The processor 804, the memory 806, and the communication interface 808 communicate with each other through the bus 802. The compute device 800 may be a server or a terminal device. It should be understood that quantities of processors and memories in the compute device 800 are not limited in this application.

The bus 802 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used for representation in FIG. 8, but this does not mean that there is only one bus or only one type of bus. The bus 802 may include a path for transferring information between components (for example, the memory 806, the processor 804, and the communication interface 808) of the compute device 800.

The processor 804 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 806 may include a volatile memory (volatile memory), for example, a random access memory (random access memory, RAM). The processor 804 may further include a non-volatile memory (non-volatile memory), for example, a read-only memory (read-only memory, ROM), a flash memory, a hard disk drive (hard disk drive, HDD), or a solid state drive (solid state drive, SSD).

The memory 806 stores executable program code. The processor 804 executes the executable program code, to separately implement the functions of the obtaining module 701, the construction module 702, the receiving module 703, the determining module 704, the sending module 705, the first configuration module 706, the second configuration module 707, and the discarding module 708 that are described above, so as to implement the internet of things technology-based message transmission configuration method. In other words, the memory 806 stores instructions for performing the internet of things technology-based message transmission configuration method.

The communication interface 808 uses a transceiver module, for example, but not limited to, a network interface card or a transceiver, to implement communication between the compute device 800 and another device or communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device like a desktop computer, a notebook computer, or a smartphone.

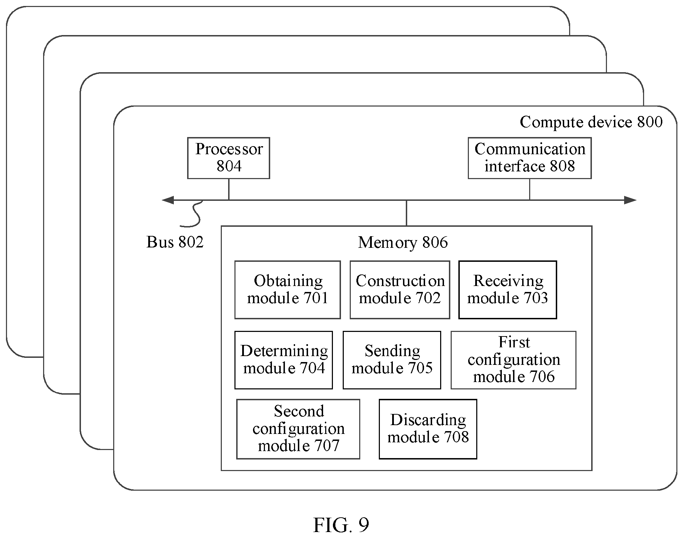

As shown in FIG. 9, a compute device cluster includes at least one compute device 800. Memories 806 in one or more compute devices 800 in the compute device cluster may store same instructions for performing the internet of things technology-based message transmission configuration method.

In some possible implementations, the memories 806 in the one or more compute devices 800 in the compute device cluster may alternatively separately store a part of the instructions for performing the internet of things technology-based message transmission configuration method. In other words, a combination of the one or more compute devices 800 may jointly perform the instructions for performing the internet of things technology-based message transmission configuration method.

It should be noted that memories 806 in different compute devices 800 in the compute device cluster may store different instructions, which are separately for performing some functions of the internet of things technology-based message transmission configuration apparatus. In other words, the instructions stored in the memories 806 in different compute devices 800 may implement functions of one or more of the obtaining module 701, the construction module 702, the receiving module 703, the determining module 704, the sending module 705, the first configuration module 706, the second configuration module 707, and the discarding module 708.

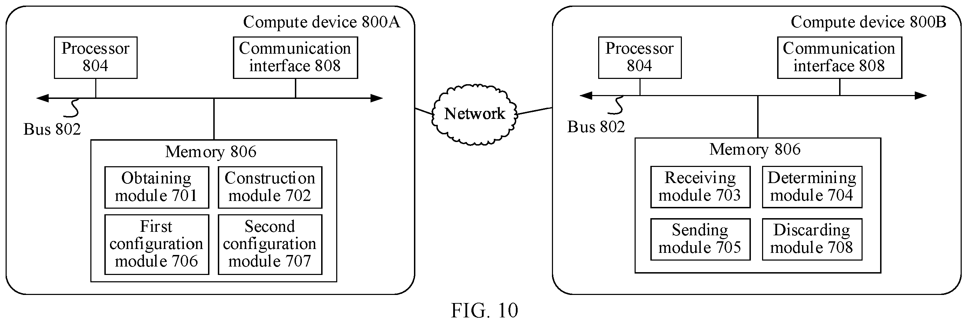

In some possible implementations, the one or more compute devices in the compute device cluster may be connected through a network. The network may be a wide area network, a local area network, or the like. FIG. 10 shows a possible implementation. As shown in FIG. 10, two compute devices 800A and 800B are connected through a network. Specifically, the compute devices are connected to the network through communication interfaces in the compute devices. In this type of possible implementation, a memory 806 in the compute device 800A stores instructions for executing the functions of the obtaining module 701, the construction module 702, the first configuration module 706, and the second configuration module 707. In addition, a memory 806 in the compute device 800B stores instructions for implementing the functions of the receiving module 703, the determining module 704, the sending module 705, and the discarding module 708.

A connection manner between compute device clusters shown in FIG. 10 may be based on a requirement of the internet of things technology-based message transmission configuration method provided in this application. Therefore, the functions implemented by the receiving module 703, the determining module 704, the sending module 705, and the discarding module 708 are considered to be performed by the compute device 800B.

It should be understood that a function of the compute device 800A shown in FIG. 10 may also be completed by a plurality of compute devices 800. Similarly, a function of the compute device 800B may also be completed by a plurality of compute devices 800.

An embodiment of this application further provides a computer program product including instructions. The computer program product may be software or a program product that includes instructions and that can be run on a compute device or can be stored in any usable medium. When the computer program product is run on at least one compute device, the at least one compute device is enabled to perform the internet of things technology-based message transmission configuration method.

An embodiment of this application further provides a computer-readable storage medium. The computer-readable storage medium may be any usable medium that can be stored by a compute device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the compute device to perform the internet of things technology-based message transmission configuration method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. An internet of things technology-based message transmission configuration method, wherein the method is applied to an internet of things platform, the internet of things platform is run on infrastructure, the infrastructure is separately connected to an internet of things device and an application-side device, the internet of things device is configured to transmit a message to the internet of things platform, the application-side device runs an internet of things application, and the method comprises:
obtaining message transmission configuration information, wherein the message transmission configuration information comprises a channel selection policy, the channel selection policy comprises a channel identifier and a message transmission condition that are of each message transmission channel of a plurality of message transmission channels, and each message transmission channel is used for transmitting a message that satisfies the message transmission condition to the internet of things application;
constructing the plurality of message transmission channels according to the channel selection policy;
receiving the message sent by the internet of things device;
determining a target message transmission channel for transmitting the message, wherein the message satisfies a message transmission condition of the target message transmission channel; and
transmitting the message to the internet of things application through the target message transmission channel.

2. The method according to claim 1, wherein the message comprises a first timestamp at which the internet of things device generates the message, and the method further comprises:
obtaining a second timestamp of the message, wherein the second timestamp is time of receiving the message sent by the internet of things device; and
determining a message transmission delay of the message based on the second timestamp and the first timestamp.

3. The method according to claim 2, wherein the message transmission condition comprises a target message transmission delay, and the determining the target message transmission channel for transmitting the message comprises:
determining, based on the message sent by the internet of things device, the target message transmission channel with the target message transmission delay that the message transmission delay satisfies.

4. The method according to any one of claims 1 to 3, wherein the message transmission condition further comprises a target message type, and the method further comprises:
determining a message type of the message based on the message sent by the internet of things device.

5. The method according to claim 4, wherein the determining the target message transmission channel for transmitting the message comprises:
determining, based on the message type of the message sent by the internet of things device, the target message transmission channel with the target message type that the message type satisfies.

6. The method according to any one of claims 1 to 5, wherein the message transmission configuration information further comprises a channel rate control policy, and the channel rate control policy indicates a traffic transmission rate of at least one message transmission channel; and
the method further comprises:
configuring the traffic transmission rate of the message transmission channel according to the channel rate control policy.

7. The method according to any one of claims 1 to 6, wherein the message transmission configuration information further comprises a message backlog policy, the message backlog policy is used to configure a message backlog parameter of at least one message transmission channel, and the message backlog parameter indicates a message backlog manner; and
the method further comprises:
configuring the message backlog parameter of the message transmission channel according to the message backlog policy.

8. The method according to claim 7, wherein the message backlog parameter comprises one or both of backlog time and a backlogged data volume.

9. The method according to any one of claims 1 to 8, wherein the method further comprises:
discarding the message if it is determined that the message does not satisfy the message transmission condition of each message transmission channel.

10. An internet of things technology-based message transmission configuration apparatus, wherein the apparatus is used on an internet of things platform, the internet of things platform is run on infrastructure, the infrastructure is separately connected to an internet of things device and an application-side device, the internet of things device is configured to transmit a message to the internet of things platform, the application-side device runs an internet of things application, and the apparatus comprises:
an obtaining module, configured to obtain message transmission configuration information, wherein the message transmission configuration information comprises a channel selection policy, the channel selection policy comprises a channel identifier and a message transmission condition that are of each message transmission channel of a plurality of message transmission channels, and each message transmission channel is used for transmitting a message that satisfies the message transmission condition to the internet of things application;
a construction module, configured to construct the plurality of message transmission channels according to the channel selection policy;
a receiving module, configured to receive the message sent by the internet of things device;
a determining module, configured to determine a target message transmission channel for transmitting the message, wherein the message satisfies a message transmission condition of the target message transmission channel; and
a sending module, configured to transmit the message to the internet of things application through the target message transmission channel.

11. The apparatus according to claim 10, wherein the message comprises a first timestamp at which the internet of things device generates the message, and the determining module is further configured to:
obtain a second timestamp of the message, wherein the second timestamp is time of receiving the message sent by the internet of things device; and
determine a message transmission delay of the message based on the second timestamp and the first timestamp.

12. The apparatus according to claim 11, wherein the message transmission condition comprises a target message transmission delay, and the determining module is specifically configured to determine, based on the message sent by the internet of things device, the target message transmission channel with the target message transmission delay that the message transmission delay satisfies.

13. The apparatus according to any one of claims 10 to 12, wherein the message transmission condition further comprises a target message type, and the determining module is further configured to:
determine a message type of the message based on the message sent by the internet of things device.

14. The apparatus according to claim 13, wherein the determining module is specifically configured to determine, based on the message type of the message sent by the internet of things device, the target message transmission channel with the target message type that the message type satisfies.

15. The apparatus according to any one of claims 10 to 14, wherein the message transmission configuration information further comprises a channel rate control policy, and the channel rate control policy indicates a traffic transmission rate of at least one message transmission channel; and
the apparatus further comprises:
a first configuration module, configured to configure the traffic transmission rate of the message transmission channel according to the channel rate control policy.

16. The apparatus according to any one of claims 10 to 15, wherein the message transmission configuration information further comprises a message backlog policy, the message backlog policy is used to configure a message backlog parameter of at least one message transmission channel, and the message backlog parameter indicates a message backlog manner; and
the apparatus further comprises:
a second configuration module, configured to configure the message backlog parameter of the message transmission channel according to the message backlog policy.

17. The apparatus according to claim 16, wherein the message backlog parameter comprises one or both of backlog time and a backlogged data volume.

18. The apparatus according to any one of claims 10 to 17, wherein the apparatus further comprises:
a discarding module, configured to discard the message if it is determined that the message does not satisfy the message transmission condition of each message transmission channel.

19. A compute device cluster, comprising at least one compute device, wherein each compute device comprises a processor and a memory; and
the processor of the at least one compute device is configured to execute instructions stored in the memory of the at least one compute device, to enable the compute device cluster to perform the method according to any one of claims 1 to 9.

20. A computer program product comprising instructions, wherein when the instructions are run by a compute device cluster, the compute device cluster is enabled to perform the method according to any one of claims 1 to 9.

21. A computer-readable storage medium, comprising computer program instructions, wherein when the computer program instructions are executed by a compute device cluster, the compute device cluster performs the method according to any one of claims 1 to 9.
